# EUROPEAN PATENT SPECIFICATION

(11) **EP 0 555 694 B1**
(45) Date of publication and mention of the grant of the patent: **19.06.1996**
(21) Application number: 93101238.9
(22) Date of filing: 28.01.1993
(51) Int. Cl.: A01D 34/13, C21D 9/22

(54) **Process for making a steel blade for agriculture and forestry**
Verfahren zur Herstellung einer Klinge aus Stahl für den land- und forstwirtschaftlichen Bereich
Procédé de fabrication d'une lame en acier pour les domaines agricole et forestier

(30) Priority: 12.02.1992 DE 4204000
(43) Date of publication of application: 18.08.1993
(73) Proprietor: ESM ENNEPETALER SCHNEID- UND MÄHTECHNIK GMBH & CO. KG, D-58256 Ennepetal (DE)
(72) Inventor: Schlasse, Manfred, Ing., W-5800 Hagen 1 (DE)
(74) Representative: Rehberg, Elmar, Dipl.-Ing.

(56) References cited:
- EP-A- 0 069 110
- DE-A- 1 946 003
- DE-A- 3 713 335
- JP-A-60 245 726
- US-A- 3 975 891
- PATENT ABSTRACTS OF JAPAN vol. 10, no. 120 (C-343)(2177) 6.Mai 1986
- DATABASE WPIL Section Ch, Week 8604, 11. Februar 1986 Derwent Publications Ltd., London, GB; Class M24, AN 86-024394 (04)

## Description

Die Erfindung bezieht sich auf ein Verfahren zur Herstellung einer mindestens eine Schneide aufweisenden Klinge aus Stahl für den land- und forstwirtschaftlichen Bereich, in dem eine Rohklinge gestanzt, diese im Bereich der später zu bildenden Schneide im Oberflächenbereich erwärmt und abgeschreckt und an der Rohklinge vor oder nach deren Vergütung und Härtung die Schneide durch Anschleifen erzeugt wird. Die Erfindung zeigt gleichzeitig eine mindestens eine Schneide aufweisende Klinge aus Stahl für den land- und forstwirtschaftlichen Bereich nach dem Oberbegriff des Anspruchs 6 auf. Unter einen solchen Klinge wird einerseits eine schneidende Klinge verstanden, die insbesondere hin- und hergehend angetrieben ist, wie dies bei Mähbalken der Fall ist. Die Erfindung kann aber auch bei schlagenden Klingen angewendet werden, die insbesondere rotierend angetrieben sind, wie dies insbesondere bei Kreiselmähwerken, Häckslern o. dgl. der Fall ist.

Messerklingen mit glatter oder mit gezahnter Schneide für Landmaschinen, insbesondere Mähmaschinen, sind aus DIN 11300, Ausgabe 1957, bekannt. Die Rohklinge wird durch einen Stanzvorgang aus einem Blechstreifen hergestellt, wobei die Rohklinge im Querschnitt überall etwa rechteckig ausgebildet ist und ansonsten den typischen Umriß einer Rohklinge aufweist. Beim Stanzen werden zugleich auch Löcher eingebracht, die der Klingenbefestigung am späteren Werkzeug, beispielsweise am Mähbalken, dienen. Das Material des Blechstreifens ist ein Stahlblech, also ein Stahl mit etwa 0,7 bis 0,8 % Kohlenstoff. Die gestanzten Rohklingen werden einer Wärmebehandlung unterworfen, durch den partiell der Bereich der Rohklinge erfaßt wird, an welchem später die Schneide gebildet werden soll. Dies geschieht durch örtliches Erwärmen auf Härtetemperatur und Abschrecken in einer Flüssigkeit, insbesondere in Öl oder einer Härteemulsion. Es schließt sich dann ein Anlaßvorgang an, der so gesteuert wird, daß die Rohklinge im Bereich der später zu bildenden Schneide eine Härte von ca. 50 bis 59 HRc aufweist. Im Kern besitzt die Rohklinge eine Zugfestigkeit von ca. 80 kp/mm². Die so wärmebehandelte Rohklinge wird dann mit der Schneide versehen. Dies geschieht durch einen Abschleifvorgang. Es wird die Schneidwarte angeschliffen und es entsteht dadurch aus der Rohklinge die Klinge.

Bei der Herstellung von Klingen, die z. B. einer größeren Biegebeanspruchung unterworfen werden, wie dies z. B. bei fingerlosen Mähbalken der Fall ist, wird die Rohklinge nach dem Stanzen zunächst vergütet. Dies geschieht durch eine Erwärmung der gesamten Rohklinge auf Härtetemperatur und ein Abschrecken in einer Flüssigkeit. Es schließt sich ein Anlaßvorgang an, der so gesteuert wird, daß die gesamte Rohklinge, also auch im Kernbereich, eine Härte von etwa 40 bis 48 HRc bekommt. Diese so vorbehandelten, nämlich vergüteten Rohklingen werden dann der oben schon beschriebenen partiellen Wärmebehandlung unterworfen, so daß nach dem Anschleifen der Schneidwarte die Klinge im Schneidenbereich eine Härte von ca. 50 bis 59 HRc aufweist. Aus der DE-PS 19 46 003 ist es zwecks Erhöhung der Elastizität und Verschleißfestigkeit der Klinge bekannt, die Rohklinge vor dem partiellen Härten der Schneiden durchgehend zu vergüten.

Die auf diese Weise hergestellten Klingen besitzen nur eine geringe Standzeit, die je nach Einsatzgebiet zwischen 3 und 20 h betragen kann. Sodann ist ein Nachschleifen der Schneidwarte erforderlich, um die Klinge wieder in einen Zustand zu versetzen, in dem ein ordnungsgemäßer Gebrauch möglich ist.

Aus der DE-OS 37 13 335 ist ein Verfahren zur Herstellung einer mindestens eine Schneide aufweisenden Klinge aus Stahl der eingangs beschriebenen Art bekannt. Als Ausgangsmaterial wird ein hochzäher, elastischer Werkstoff eingesetzt, der vorzugsweise zwischenstufenvergütet ist, also ebenfalls etwa 0,7 bis 0,8 % Kohlenstoff enthält. Nach dem Stanzen der Rohklinge wird diese im Bereich der später zu bildenden Schneide im Oberflächenbereich partiell erwärmt und abgeschreckt. Die partielle Oberflächenerwärmung geschieht durch eine örtlich-zeitlich dosierte Energieübertragung mit Hilfe eines an sich bekannten hochfrequentprogrammiert abgelenkten Elektronenstrahl mit anschließender Selbstabschreckung. Damit wird die Oberfläche partiell gleichsam in einer sehr dünnen Schicht umgeschmolzen und die Abschreckung erfolgt durch Wärmeleitung in der Rohklinge. Die dabei erzeugte gehärtete dünne Schicht kann eine Dicke aufweisen, die dem Grenzschneidenradius entspricht. Das Härten mit Hilfe des Elektronenstrahls geschieht partiell an einer solchen Stelle, die von dem nachfolgenden Schleifvorgang zur Bildung der Schneidwarte nicht erfaßt wird. Nachteilig ist an diesem bekannten Verfahren, daß es relativ teuere Anlagen für die Erwärmung mit dem Elektronenstrahl erfordert. Die Wärmebehandlung muß darüberhinaus im Vakuum durchgeführt werden, um eine Oxidation zu vermeiden. Der Fertigungsaufwand ist somit ganz erheblich. Wenn zwischenstufenvergütetes Material als Ausgangsmaterial eingesetzt wird, erhöht sich der gesamte Herstellungsaufwand entsprechend. Mit dieser aufwendigen Oberflächenbehandlung kann zwar eine Härtesteigerung im Bereich der Schneide gegenüber den anderen bekannten Herstellverfahren erzielt werden, so daß vielleicht eine Härte von ca. 60 HRc oder geringfügig darüber erzielbar sein mag; hierdurch wird zwar vorteilhaft die Standzeit verbessert. Die Verbesserung ist aber auf einen Faktor in der Größenordnung von etwa 1,7, also entsprechend einer Standzeit zwischen 5 und etwa 35 h, begrenzt.

Eine Klinge nach dem Oberbegriff des Anspruch 6 ist aus der JP-A-60 245 726 bekannt. Diese Klinge weist einen perlitischen Kern mit einer Härte von 40-45 HRc und eine martensitische Schneide mit einer Härte von 50-65 HRc auf.

Die Erfindung geht von dieser geschilderten Problematik aus und ist auf die Schaffung eines Verfahrens gerichtet, mit dem Klingen mit verbesserter Standzeit herstellbar sind und trotzdem vergleichsweise niedrigere Herstellkosten anfallen. Es soll eine preiswert herstellbare Klinge mit großer Standzeit aufgezeigt werden.

Erfindungsgemäß wird dies mit dem Verfahren des Anspruchs 1 erreicht. In der Regel wird die thermo-chemische Oberflächenbehandlung an der Rohklinge durchgeführt, so daß also erst anschließend durch das Anschleifen der Schneidwarte aus der Rohklinge die Klinge entsteht. Für besondere Anwendungsfälle kann es ausnahmsweise aber auch sinnvoll sein, der Klinge ihre endgültige Form zu geben, also unter Einschluß der angeschliffenen Schneidwarte, um sodann die thermo-chemische Oberflächenbehandlung durchzuführen und dabei gleichzeitig auch den Kern zu vergüten. In der einfachsten Form wird man auch die gesamte Oberfläche der Rohklinge oder der Klinge thermisch-chemisch oberflächenbehandeln, wobei es an sich nur auf eine entsprechende Gestaltung im Bereich der Schneide ankommt. Die Mitbehandlung der restlichen Oberfläche stört jedoch in vielen Fällen nicht. Sie ist teilweise auch noch vorteilhaft, z. B. indem an Auflageflächen bei z. B. hin- und hergehend angetriebenen Messern bei einer solchen Gleitlagerung der Verschleiß gleichzeitig vermindert wird. Es ist aber ohne Weiteres aber auch denkbar, Teile der Oberfläche abzudecken und damit die Oberfläche nur in ihrem freien Bereich thermo-chemisch oberflächenzubehandeln. Ganz wichtig ist die Verwendung eines kohlenstoffarmen Stahls. Damit wird eine Entwicklungsrichtung eingeschlagen, die der bisher im Stand der Technik praktizierten Entwicklungsrichtung entgegenläuft.

Mit dem neuen Herstellverfahren sind eine Reihe von Vorteilen verbunden: durch Verwendung eines kohlenstoffarmen Stahls wird ein preiswerter Ausgangswerkstoff eingesetzt. Auch die sich anschließenden Herstellungsschritte sind preiswerter durchführbar als die zur Realisierung des Stands der Technik erforderlichen Verfahrensschritte. Eine Anlage, die mit Vakuum arbeitet, ist völlig entbehrlich. Mit der gleichsam einstufigen thermo-chemischen Oberflächenbehandlung wird gleichzeitig eine Härtung im Oberflächenbereich und eine Vergütung im Kernbereich erzielt. Die höhere Härte im Oberflächenbereich, insbesondere im Bereich der Schneide, erbringt eine Verbesserung der Standzeit mindestens um den Faktor 2 gegenüber dem eingangs beschriebenen Stand der Technik. Weiterhin tritt vorteilhaft bei der Abnutzung der Klingen ein Selbstschärfeffekt auf, weil die Fläche der Schneidwarte - spätestens nach dem ersten Nachschleifen - zumindest im Bereich der Schneidenspitze in der Härte stark angehobene Materialpartien aufweist, während im Nachbarbereich das vergütete Kernmaterial die Oberfläche der Schneidwarte bildet, so daß sich hier ein Verschleiß in einem verstärkten Abtrageffekt bemerkbar macht, so daß damit letztendlich die Schneidspitze durch diesen Verschleiß selbst nachgeschärft wird. Die Neigung der Klingen zu einer Balligkeit ist gering, wenn die härtere Oberfläche eine Auflagefläche ist, wie dies bei hin- und hergehend angetriebenen Mähklingen der Fall ist. Schließlich wird die nach dem Verfahren hergestellte Klinge eine größere Biegesteifigkeit aufweisen, weil die höhere Härte im vergüteten Kernbereich in der Größenordnung von 35 bis 48 HRc immer noch höher liegt als die Härte im Kernbereich eines zwischenstufenvergüteten Materials. Die freie Oberfläche der Rohklinge kann bei der thermisch-mechanischen Oberflächenbehandlung auf etwa 65 bis 70 HRc gehärtet werden. Dabei kommt es nicht darauf an, ob die gesamte Oberfläche der Rohklinge aufgehärtet wird oder ob ein Teil der Oberfläche abgedeckt wird, so daß nur die restliche Oberfläche als freie Oberfläche von der Härtung erfaßt wird. Wichtig ist natürlich, daß letztlich eine freie Oberfläche im Bereich der Schneide gehärtet wird.

Als kohlenstoffarmer Stahl kann insbesondere ein ST 52, ein C 22 oder ein C 35 o. dgl. Einsatz finden. Diese kohlenstoffarmen Stähle wurden bisher auf dem Gebiet der Herstellung von Klingen überhaupt nicht verwendet.

Zur teilweisen thermo-chemischen Oberflächenbehandlung kann ein Teil der Oberfläche der Rohklinge mit einem die Diffusion be- oder verhindernden Schutzüberzug abgedeckt werden. Dies geschieht insbesondere an solchen Stellen, an denen ein materialabtragender, verstärkter Verschleiß erwünscht ist.

Die thermo-chemische Oberflächenbehandlung kann durch Einsatzhärten, Nitrieren oder Carbonitrieren erfolgen. Bei all diesen Verfahren diffundiert Kohlenstoff und/oder Stickstoff in die Oberflächenschichten der Klinge bzw. der Rohklinge. Insbesondere durch eine zeitliche Steuerung kann auf die Schichtdicke Einfluß genommen werden, die auf diese Weise für die Aufhärtung vorbereitet wird.

Die erfindungsgemäße Klinge weist die Merkmale des Anspruchs 6 auf.

Damit wird die Standzeit der Klinge erheblich verbessert. Das Nachschleifen ist somit erst in größeren zeitlichen Abständen erforderlich. Die Kernschicht ist vergütet und weist eine demgegenüber geringere Härte auf, die jedoch höher ist als bei zwischenvergütetem Material. Die gehärtete Schicht weist eindiffundierten Kohlenstoff und/oder Stickstoff auf. Besonders sinnvoll sind durch Carbonitrieren gehärtete Schichten, die also sowohl Kohlenstoff als auch Stickstoff aufweisen.

Die gehärtete Schicht kann sich im wesentlichen über die Oberflächenbereiche der Klinge erstrecken, die parallel zur Haupterstreckungsebene der Klinge liegen, während große Bereiche der Schneidwarten vergleichsweise weicher ausgebildet sind, so daß sich der unvermeidliche Verschleiß dort in einem vergleichsweise erhöhten Materialabtrag bemerkbar macht. Dadurch entsteht der Selbstschärfeffekt.

Die gehärtete Schicht kann eine Schichtdicke von etwa 0,05 bis 0,4 mm aufweist. Sie liegt insbesondere damit auf einem Wert, der dem doppelten Betrag des Grenzschneidenradiusses entspricht. Die Klinge kann aus ST 52, aus C 22 oder aus C 35 bestehen. Ähnliche kohlenstoffarme Stähle sind ebenfalls verwendbar.

Die Erfindung wird anhand bevorzugter Ausführungsbeispiele weiter verdeutlicht und beschrieben. Es zeigen:
- Figur 1: eine schematische Darstellungsfolge zur Verdeutlichung einer ersten Herstellmöglichkeit der Klinge,
- Figur 2: die Darstellung des Details II aus Figur 1 in vergrößernder Darstellung,
- Figur 3: eine schematische Darstellungsfolge zur Verdeutlichung einer zweiten Herstellmöglichkeit der Klinge und
- Figur 4: eine ähnliche Darstellung wie Figur 2 bei einer mit einer Ausprägung versehenen Klinge.

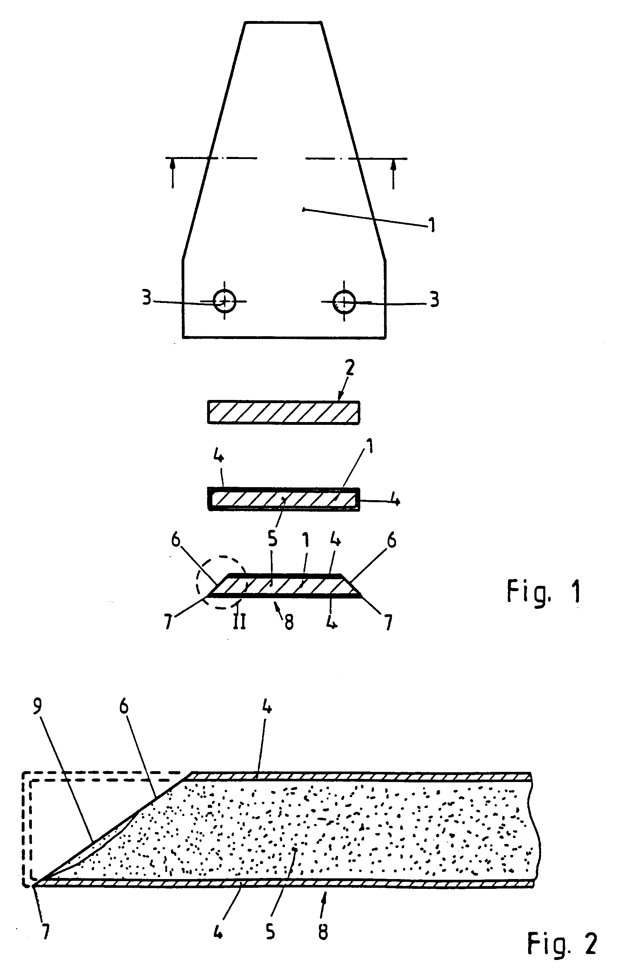

Figur 1 zeigt zunächst eine Draufsicht auf eine Rohklinge 1. Die Rohklinge 1 besitzt in allen Querschnitten rechteckigen Querschnitt 2. Gemäß der Schnittangabe ist ein solcher rechteckiger Querschnitt dargestellt, wobei der Schnitt parallel zur Verbindungslinie zweier Befestigungslöcher 3 gelegt ist. Die Rohklinge 1 wird einschließlich der Befestigungslöcher 3 durch Stanzen eines Blechstreifens aus kohlenstoffarmem Stahl hergestellt.

Die gestanzte Rohklinge 1 wird bei der thermo-chemischen Oberflächenbehandlung, die sich auf die gesamte freie Oberfläche der Rohklinge 1 erstreckt - hier die gesamte Oberfläche der Rohklinge 1 - in der Weise durchgeführt, daß die gesamte Rohklinge 1 zunächst erwärmt wird und in die gesamten Oberflächenschichten Kohlenstoff und/oder Stickstoff per Diffusion zur Einwanderung gebracht wird. Es entsteht dann eine die Rohklinge 1 komplett einhüllende Schicht 4, in welcher trotz Verwendung eines kohlenstoffarmen Stahls Kohlenstoff und/oder Stickstoff angereichert vorhanden ist. Die gesamte Rohklinge wird dann in einer Flüssigkeit, insbesondere in Öl, abgeschreckt, so daß sich in der Schicht 4 eine Härte von ca. 65 bis 70 HRc einstellt. Durch die Abschreckung der erwärmten Rohklinge 1 wird die Kernschicht 5 beim Abschrecken gleichzeitig vergütet, wobei eine Kernhärte von 40 bis 48 HRc entsteht. Anschließend werden schließlich zwei Schneidwarten 6 angeschliffen, so daß damit an den üblichen Stellen zwei Schneiden 7 entstehen. Im Bereich der Schneiden 7 ist auf den Hauptflächen der damit entstandenen Klinge 8 die harte Schicht 4 noch vorhanden, während im Mittelbereich der Schneidwarten 6 die vergleichsweise weiche Kernschicht 5 nunmehr an der Oberfläche liegt.

Figur 2 zeigt die Verhältnisse in vergrößernder Darstellung. Das durch Schleifen abgetragene Material zur Bildung der Schneidwarte 6 ist gestrichelt dargestellt. Man erkennt deutlich die gehärtete Schicht 4 und die vergleichsweise weiche Kernschicht 5. Ein Materialabtrag 9 durch erhöhten Verschleiß beim Gebrauch der Klinge 8 ergibt eine bogenförmig angedeutete Vertiefung im Bereich der Kernschicht 5 und im Anschluß an die Schneide 7, so daß hier der Selbstschärfeffekt der Schneide 7 besonders deutlich erkennbar wird. Wenn sich die Schicht 4 bei dieser Herstellungsart nicht über die gesamte Oberfläche der Rohklinge 1 erstrecken soll, ist es möglich, Oberflächenbereiche durch eine hier nicht dargestellte Schutzschicht, beispielsweise einen Farbauftrag, vor der thermo-chemischen Oberflächenbehandlung der Rohklinge 1 abzudecken und ansonsten so zu verfahren, wie dies beschrieben worden ist.

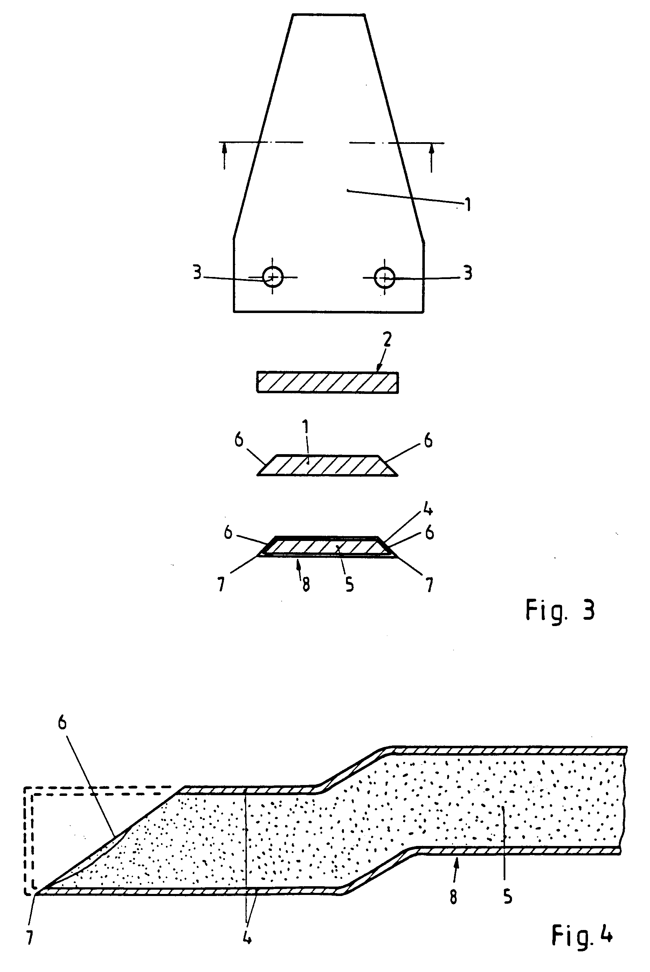

Figur 3 verdeutlicht ein abgewandeltes Herstellverfahren, welches jedoch nur in Ausnahmefällen für besondere Anwendungen sinnvoll ist. Auch hier wird die Rohklinge 1 gestanzt und bekommt damit ihren rechteckigen Querschnitt 2. Auch hier wird kohlenstoffarmer Stahl als Ausgangsmaterial eingesetzt. In Abänderung zu dem Herstellverfahren gemäß Figur 1 wird jedoch vor der thermo-chemischen Oberflächenbehandlung an die Rohklinge 1 die Schneidwarte oder die Schneidwarten 6 angeschliffen. Erst anschließend erfolgt die thermo-chemische Oberflächenbehandlung auf der gesamten sich nunmehr ergebenden Oberfläche der Rohklinge 2, sofern nicht Teile davon abgedeckt werden. Es entsteht damit die fertige Klinge 8, bei der sich nunmehr die gehärtete Schicht 4 auch über die Schneidwarten 6 erstreckt. Dies ist jedoch nicht nachteilig, abgesehen davon, daß sich der Selbstschärfeffekt beim Erstgebrauch der Klingen nicht auswirken kann. Sobald jedoch die Klinge 8 nachgeschliffen wurde und die gehärtete Schicht 4 im Bereich der Schneidwarten 6 entfernt ist, wird sich auch hier der Selbstschärfeffekt einstellen.

Figur 4 zeigt eine Klinge 8, deren gestanzter Zuschnitt mit einer Ausprägung versehen wurde, um nur Bereiche der Klinge 8 für eine Auflage heranzuziehen und damit eine Erhöhung der spezifischen Flächenpressung in diesem Bereich zu erzielen. Die gehärtete Schicht 4 überzieht auch diesen Auflagebereich, so daß die gehärtete Schicht 4 hier zusätzlich einen Verschleißschutz bewirkt. Aus der zeichnerischen Darstellung ist erkennbar, daß die thermo-chemische Oberflächenbehandlung erst nach Anbringung der Ausprägung an der Rohklinge stattgefunden hat. Auch hier wird die Schneidwarte 6 und damit auch die Schneide 7 durch einen Schleifvorgang gebildet. Andererseits wäre es auch möglich, so zu verfahren, wie dies im Zusammenhang mit Figur 3 beschrieben wurde, also an der ungehärteten Rohklinge 1 die Schneidwarte zu schleifen und erst anschließend die thermo-chemische Oberflächenbehandlung durchzuführen, so daß sich die harte Schicht 8 dann auch über den Bereich der Schneidwarte 6 erstrecken würde.

### Bezugszeichenliste:

- 1 =: Rohklinge
- 2 =: rechteckiger Querschnitt
- 3 =: Befestigungsloch
- 4 =: gehärtete Schicht
- 5 =: Kernschicht
- 6 =: Schneidwarte
- 7 =: Schneide
- 8 =: Klinge

## Claims

1. Method for the production of a steel blade (8) for agriculture and forestry containing at least one cutting edge (7) with the following steps
- a blade body (1) is punched out of low carbon steel;
- a cutting edge (7) is produced by grinding the blade body (1) prior or after the quench hardening and the tempering; and
- the blade body (1) with its surface after punching or the blade (8) with its surface after grinding are subjected to thermo-chemical surface treatment at least on the cutting edge, whereby
* the blade body (1) or the blade (8) is warmed up entirely,
* carbon and/or nitrogen is caused to penetrate by diffusion into the uncovered surface of the blade body (1) or the blade (8) and
* the blade body (1) or the blade (8) is quench hardened;
so that the blade body (1) or the blade (8) is tempered simultaneously in the core material (5) and hardened on the uncovered surface at least of the cutting edge, whereby the core material (5) gets a hardness of about 35 HRc to 48 HRc.

2. The method of claim 1, **wherein** the uncovered surface of the blade body (1) gets a hardness of about 65 HRc to 70 HRc during the thermo-chemical treatment.

3. The method of claim 1 or 2, **wherein** as a low carbon steel ST 52, C 22, C 35 or similar is used.

4. The method of claim 1, **wherein** a part of the surface of the blade body (1) is covered prior to the thermo-chemical surface treatment at the wearing surface (6) with a protection layer to hinder or avoid the diffusion.

5. The method of claim 1, **wherein** the thermo-chemical surface treatment is performed by case-hardening, nitration-hardening or carbonitration-hardening.

6. A steel blade for agriculture and forestry containing at least one cutting edge (7), the blade comprises a hardened layer (4) at the grinded or regrinded wearing surface (6) forming the top of the cutting edge and a soft core material (5) having a hardness of about 35 HRc to 48 HRc, especially between 40 HRc and 48 HRc, **wherein** the hardened layer (4) contains diffused carbon and/or nitrogen and the soft core material (5) consists of a low carbon steel.

7. The blade of claim 6, **wherein** the hardened layer (4) has a hardness of about 65 HRc to 70 HRc.

8. The blade of claim 6 or 7, **wherein** the hardened layer (4) extends almost over those surface areas of the blade (8), which are located parallel with respect to the main extending surface of the blade (8).

9. The blade of one or more of the claims 6 to 8, **wherein** the hardened layer (4) has a thickness of 0,05 mm to 0,4 mm.

10. The blade of one or more of the claims 6 to 9, **wherein** the blade (8) consists of ST 52, C 22 or C 35.

## Patentansprüche

1. Verfahren zur Herstellung einer mindestens eine Schneide (7) aufweisenden Klinge (8) aus Stahl für den land- und forstwirtschaftlichen Bereich, bei dem
- eine Rohklinge (1) aus einem kohlenstoffarmen Stahl gestanzt wird;
- an der Rohklinge (1) vor oder nach deren Vergütung und Härtung eine Schneide (7) durch Anschleifen erzeugt wird; und
- die Rohklinge (1) mit ihrer sich nach dem Stanzen oder die Klinge (8) mit ihrer sich nach dem Anschleifen ergebenden Oberfläche zumindest im Bereich der Schneide thermo-chemisch oberflächenbehandelt wird, indem
* die Rohklinge (1) oder die Klinge (8) dabei ganz erwärmt wird,
* in die freie Oberfläche der Rohklinge (1) oder Klinge (8) Kohlenstoff und/oder Stickstoff per Diffusion eingebracht wird und
* die Rohklinge (1) oder Klinge (8) abgeschreckt wird;
so daß die Rohklinge (1) oder Klinge (8) gleichzeitig in der Kernschicht (5) vergütet und auf ihrer freien Oberfläche zumindest im Bereich der Schneide gehärtet wird, wobei die Kernschicht (5) eine Härte von etwa 35 bis 48 HRc erhält.

2. Verfahren nach Anspruch 1, **dadurch gekennzeichnet**, daß die freie Oberfläche der Rohklinge (1) bei der thermo-chemischen Oberflächenbehandlung auf etwa 65 bis 70 HRc gehärtet wird.

3. Verfahren nach Anspruch 1 oder 2, **dadurch gekennzeichnet**, daß als kohlenstoffarmer Stahl ein ST 52, C 22, C 35 o. dgl. Einsatz findet.

4. Verfahren nach Anspruch 1, **dadurch gekennzeichnet**, daß zur teilweisen thermo-chemischen Oberflächenbehandlung ein Teil der Oberfläche der Rohklinge (1) mit einem die Diffusion be- oder verhindernden Schutzüberzug im Bereich der Schneidwarte (6) abgedeckt wird.

5. Verfahren nach Anspruch 1, **dadurch gekennzeichnet**, daß die thermo-chemische Oberflächenbehandlung durch Einsatzhärten, Nitrieren oder Carbonitrieren erfolgt.

6. Mindestens eine Schneide (7) aufweisende Klinge (8) aus Stahl für den land- und forstwirtschaftlichen Bereich, die im Bereich einer angeschliffenen oder nachzuschleifenden Schleifwarte (6) eine eine Schneidenspitze bildende gehärtete Schicht (4) und anschließend eine weiche Kernschicht (5) mit einer Härte von etwa 35 bis 48 HRc - insbesondere zwischen 40 und 48 HRc - aufweist, **dadurch gekennzeichnet**, daß die gehärtete Schicht (4) eindiffundierten Kohlenstoff und/oder Stickstoff aufweist und die weiche Kernschicht (5) aus einem kohlenstoffarmen Stahl besteht.

7. Klinge nach Anspruch 6, **dadurch gekennzeichnet**, daß die gehärtete Schicht (4) eine Härte von etwa 65 bis 70 HRc aufweist.

8. Klinge nach Anspruch 6 oder 7, **dadurch gekennzeichnet**, daß sich die gehärtete Schicht (4) im wesentlichen über die Oberflächenbereiche der Klinge (8) erstreckt, die parallel zur Haupterstreckungsebene der Klinge (8) liegen.

9. Klinge nach einem oder mehreren der Ansprüche 6 bis 8, **dadurch gekennzeichnet**, daß die gehärtete Schicht (4) eine Schichtdicke von 0,05 bis 0,4 mm aufweist.

10. Klinge nach einem oder mehreren der Ansprüche 6 bis 9, **dadurch gekennzeichnet**, daß die Klinge (8) aus ST 52, C 22 oder C 35 besteht.

## Revendications

1. Procédé de fabrication d'une lame (8) en acier, présentant au moins un tranchant (7), pour le secteur agricole et forestier dans lequel
- une lame brute (1) est découpée dans un acier pauvre en carbone ;
- avant ou après la trempe et le revenu de la lame brute (1), un tranchant (7) est produit sur celle-ci par affûtage : et
- la lame brute (1) avec sa surface résultant de la découpe ou la lame (8) avec sa surface résultant de l'affûtage subit, au moins dans la zone du tranchant, un traitement de surface thermochimique, en ce que
* la lame brute (1) ou la lame (8) est totalement chauffée,
* du carbone ou de l'azote est introduit par diffusion dans la surface libre de la lame brute (1) ou de la lame (8) et
* la lame brute (1) ou la lame (8) est trempée ;
de sorte que la lame brute (1) ou la lame (8) est simultanément améliorée dans la couche de noyau (5) et durcie sur sa surface libre, au moins dans la zone du tranchant, la couche de noyau (5) obtenant une dureté comprise entre 35 et 48 HRc environ.

2. Procédé selon la revendication 1, caractérisé en ce que la surface libre de la lame brute (1) est durcie de 65 à 70 HRc environ, lors du traitement de surface thermochimique.

3. Procédé selon la revendication 1 ou 2, caractérisé en ce qu'on utilise comme acier pauvre en carbone un acier désigné ST 52, C 22, C35 ou similaire.

4. Procédé selon la revendication 1, caractérisé en ce que pour le traitement de surface thermochimique partiel, une partie de la surface de la lame brute (1) est recouverte avec un revêtement de protection retardant ou empêchant la diffusion, dans la zone de la garde (6) du tranchant.

5. Procédé selon la revendication 1, caractérisé en ce que le traitement de surface thermochimique s'effectue par cémentation, nitruration ou carbonitruration.

6. Lame (8) présentant au moins un tranchant (7), en acier, pour le secteur agricole et forestier, qui dans la zone d'une garde (6) de tranchant affûtée ou à réaffûter présente une couche (4) durcie formant une pointe de tranchant et à la suite une couche de noyau (5) douce d'une dureté comprise entre 35 et 48 HRc environ - en particulier entre 40 et 48 HRc -, caractérisée en ce que la couche durcie (4) comporte du carbone et/ou de l'azote diffusé à l'intérieur et l a couche de noyau (5) douce est en acier pauvre en carbone.

7. Lame selon la revendication 1, caractérisée en ce que la couche durcie (4) présente une dureté comprise entre 65 et 70 HRc.

8. Procédé selon la revendication 6 ou 7, caractérisé en ce que la couche durcie (4) s'étend essentiellement sur les zones de surface de la lame (8), qui sont parallèles au plan d'extension principal de la lame (8).

9. Lame selon une ou plusieurs des revendications 6 à 8, caractérisé en ce que la couche durcie (4) présente une épaisseur de 0,05 à 0,4 mm.

10. Lame selon une ou plusieurs des revendications 6 à 9, caractérisé en ce que la lame (8) est en ST 52, C 22 ou C35.
